# EUROPEAN PATENT SPECIFICATION

(11) **EP 2 433 756 B1**
(45) Date of publication and mention of the grant of the patent: **25.03.2015**
(21) Application number: 11007527.2
(22) Date of filing: 15.09.2011
(51) Int. Cl.: B25F 5/00, H02K 9/00, H02P 29/00, H02K 11/00

(54) **Electric power tool**
Elektrisches Werkzeug
Outil électrique

(30) Priority: 27.09.2010 JP 2010216217
(43) Date of publication of application: 28.03.2012
(73) Proprietor: Panasonic Corporation, Osaka 571-8501 (JP)
(72) Inventor: Okada, Masaaki, Hikone Shiga 522-8520 (JP); Miyazaki, Hiroshi, Hikone Shiga 522-8520 (JP)
(74) Representative: von Samson-Himmelstjerna, Friedrich

(56) References cited:
- JP-A- H10 191 691
- JP-A- 2008 193 865
- JP-A- 2010 069 598
- US-A1- 2006 120 121
- US-A1- 2007 284 664

## Description

### Field of the Invention

The present invention relates to an electric power tool provided with a brushless motor according to the preamble of claim 1.

### Background of the Invention

An electric power tool including a brushless motor and a motor circuit for supply an electric power to the brushless motor is well-known in the art. The motor circuit is formed into a three-phase bridge type using six switching units.

In the electric power tool of this type, it is often the case that, when a motor comes into a locked state due to a heavy load applied while in use, an electric current continues to flow through a specific switching unit making up the motor circuit. In this case, the temperature of the specific switching unit grows higher, which may possibly cause a thermal damage to the specific switching unit.

As a solution to this problem, Japanese Patent Application Publication No. 2010-69598 (JP2010-69598A) discloses an electric power tool in which a temperature detecting unit is arranged on a mounting surface of a circuit board in an adjoining relationship with a switching unit mounted on the circuit board. The operation of a motor is restrained depending on the detection results of the temperature detecting unit.

In the conventional electric power tool disclosed in JP2010-69598A, the switching unit and the temperature detecting unit are arranged in mutually spaced-apart positions on the same mounting surface. Thus, the temperature responsiveness of the temperature detecting unit with respect to the switching unit is not so high. In other words, the conventional electric power tool suffers from a problem in that a difference is likely to be made between the temperature detected by the temperature detecting unit and the actual temperature of the switching unit.

JP 2008 193865 A, which discloses the preamble of claim 1, discloses a motor driving device including a thermal fuse that detects the temperature of an FET in an inverter circuit for supplying a drive current to a motor so as to turn off the inverter circuit when the detected temperature exceeds a first reference temperature.

JP H 10 19 1691 A discloses thermistors as temperature detectors being arranged and installed at respective diode elements so as to be close to diode elements. When one of the diode elements is overheated, it is detected by the thermistors and a signal is output. Thereby, when any one of the diode elements is overheated, the electricity generating action of the generator motors is suppressed. When an overheating state is not improved after a prescribed time after its suppression, the electricity generating action is stopped. Thereby, it is possible to prevent an inverter module from being overheated when the generator motors act as motors or generators.

### Summary of the invention

While the invention is defined in the independent claim, further aspects are set forth in the dependent claim, the following description and the accompanying drawings.

In view of the above, the present invention provides an electric power tool capable of accurately detecting a temperature rise in a switching unit and, eventually, capable of avoiding occurrence of thermal damage in the switching unit with increased reliability even when a motor is in a locked state.

The electric power tool of the present invention has the following configurations.

In accordance with an embodiment of the present invention, there is provided an electric power tool including a three-phase bridge motor circuit including upper and lower switching units of U, V and W phases arranged in upper and lower rows; a brushless motor rotationally operated by an electric power supplied through the motor circuit; and temperature detecting units for detecting temperatures of the switching units to output detection results such that the operation of the brushless motor is restrained or stopped depending on the detection results outputted from the temperature detecting units. The motor circuit is formed by mounting the switching units at six points on a mounting surface of a circuit board, and the temperature detecting units are arranged on a surface of the circuit board opposite to the mounting surface.

The temperature detecting units are arranged rearward of the lower switching units of U, V and W phases, or the temperature detecting units are arranged rearward of the upper switching units of U, V and W phases. Each of the switching units may include a plurality of switching elements, and each of the temperature detecting units may be formed of a single temperature detecting element.

The present invention has an effect of accurately detecting a temperature rise in a switching unit and avoiding occurrence of thermal damage in the switching unit with increased reliability even when a motor is in a locked state.

### Brief Description of the Drawings

The objects and features of the present invention will become apparent from the following description of embodiments, given in conjunction with the accompanying drawings, in which:
Fig. 1 is a schematic wiring diagram of an electric power tool in accordance with a first embodiment of the present invention;
Fig. 2A shows the front surface of a circuit board employed in the electric power tool of the first embodiment and Fig. 2B depicts the rear surface thereof;
Fig. 3 is a schematic wiring diagram of an electric power tool in accordance with a second embodiment of the present invention; and
Fig. 4A shows the front surface of a circuit board employed in the electric power tool of the second embodiment and Fig. 4B depicts the rear surface thereof.

### Detailed Description of the Embodiments

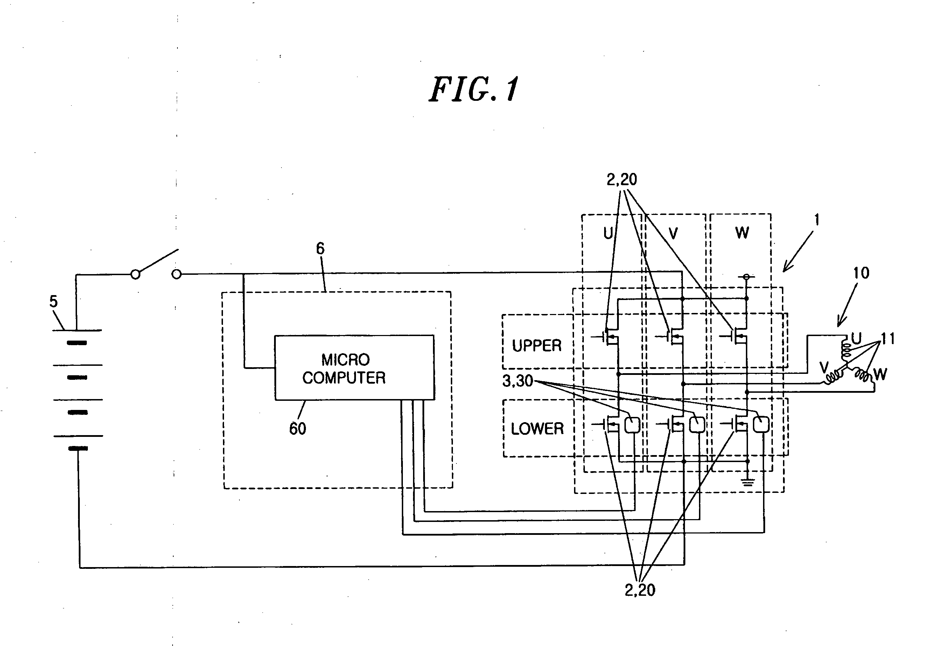

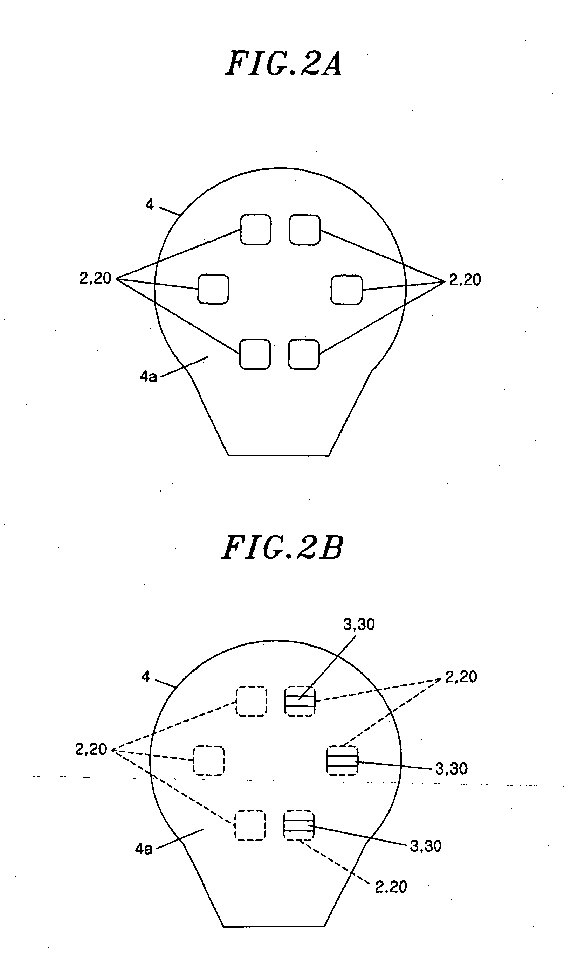

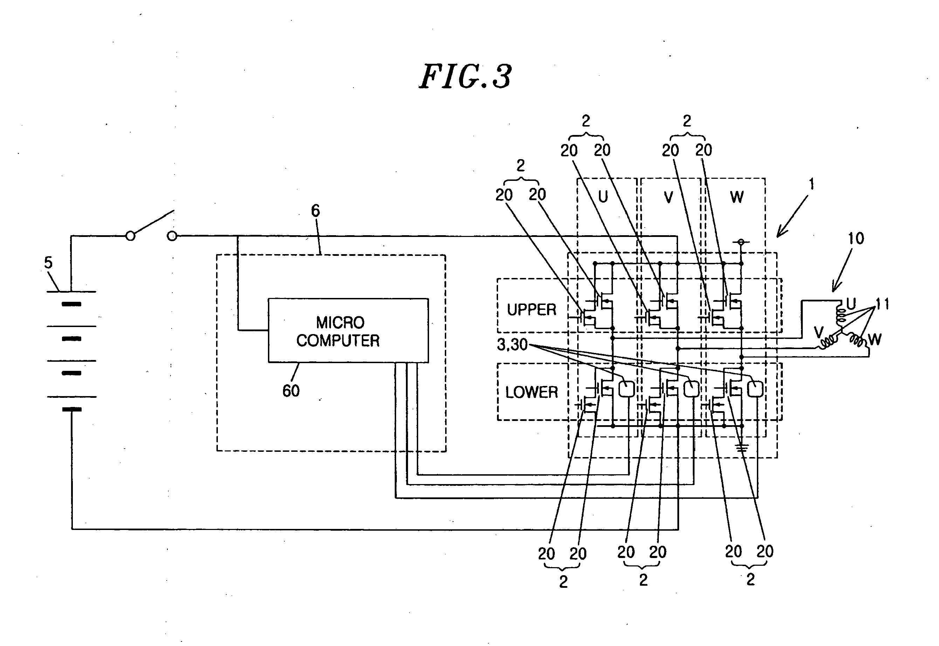

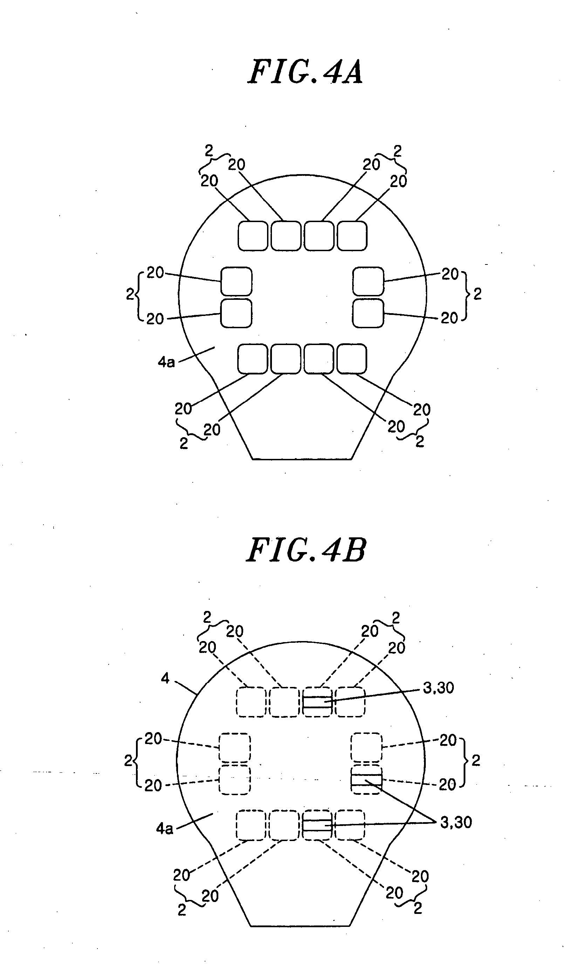

Certain embodiments of the present invention will now be described with reference to the accompanying drawings which form a part hereof. Figs. 1 and 2 show the configuration of an electric power tool in accordance with a first embodiment of the present invention. Figs. 3 and 4 illustrate the configuration of an electric power tool in accordance with a second embodiment of the present invention.

First, description will be given on an electric power tool in accordance with the first embodiment of the present invention. Referring to a schematic wiring diagram shown in Fig. 1, the electric power tool of the present embodiment includes a battery unit 5 composed of a rechargeable battery pack and a motor circuit 1 connected to the battery unit 5. The motor circuit 1 is a three-phase bridge type circuit in which switching units 2 of U, V and W phases are arranged in upper and lower rows.

Specifically, the motor circuit 1 includes upper and lower switching units 2 of U phase, upper and lower switching units 2 of V phase and upper and lower switching units 2 of W phase. The upper and lower switching units 2 are serially connected to one another in each phase. Sets of the serially-connected upper and lower switching units 2 are parallel-connected to each other. In the respective sets of the serially-connected upper and lower switching units 2, the upper row is connected to a positive electrode of the battery unit 5 and the lower row is connected to a negative electrode of the battery unit 5.

The electric power tool further includes a brushless motor 10 having a stator composed of coils 11 of U, V and W phases. The U-phase coil 11 is electrically connected to the junction point of the upper and lower switching units 2 of U phase. Similarly, the V-phase coil 11 is electrically connected to the junction point of the upper and lower switching units 2 of U phase. The W-phase coil 11 is electrically connected to the junction point of the upper and lower switching units 2 of W phase.

In the present embodiment, each of the switching units 2 includes a single switching element 20 composed of a field effect transistor (FET). The FET of the switching element 20 has a gate connected to a control circuit 6 of the electric power tool. The control circuit 6 outputs a signal to the switching element 20 so as to enable the switching element 20 to perform a switching operation. As a result, a direct current voltage supplied from the battery unit 5 is supplied to the respective coils 11 as a three-phase voltage.

In the electric power tool of the present embodiment, dedicated temperature detecting units 3 are respectively arranged in a corresponding relationship with the U, V and W phases to detect the temperatures of the switching units 2. As shown in Figs. 2A and 2B, the switching units 2 and the temperature detecting units 3 are arranged on front and rear surfaces of a same circuit board 4 having a thin plate shape. Specifically, six switching units 2 (i.e., six switching elements 20 in total) are mounted on a front mounting surface 4a of the circuit board 4. In Fig. 2A, three left switching units 2 are the lower switching units 2 of the respective phases, and three right switching units 2 are the upper switching units 2 of the respective phases.

In the meantime, the temperature detecting units 3 are mounted at three points on a flat surface 4b of the circuit board 4 opposite to the mounting surface 4a (The surface 4b will be referred to as "opposite surface 4b" herein below). Each of the temperature detecting units 3 is composed of a single temperature detecting element 30. In other words, three temperature detecting elements 30 in total are arranged on the opposite surface 4b of the circuit board 4. Surface-mount type thermistors or posistors (positive temperature characteristic thermistor) are used as the temperature detecting elements 30.

Specifically, as shown in Fig. 2B, the temperature detecting units 3 are arranged in different areas of the opposite surface 4b of the circuit board 4 existing rearward of the respective lower switching units 2 of U, V and W phases, one in each area. In Fig. 2B, the areas of the opposite surface 4b of the circuit board 4 existing rearward of the respective switching units 2 are indicated by dot lines. Three left areas surrounded by dot lines in Fig. 2B are located rearward of the upper switching units 2 of the respective phases, while three right areas surrounded by dot lines in Fig. 2B are positioned rearward of the lower switching units 2 of the respective phases.

The respective temperature detecting elements 30 are connected to a microcomputer 60 of the control circuit 6. Detection results of the temperature detecting elements 30 are inputted to the microcomputer 60. If the detection results thus inputted are greater than a specified threshold value, the microcomputer 60 controls a motor-driving duty ratio, thereby restraining or stopping the operation of the brushless motor 10.

In this regard, the respective temperature detecting elements 30 are arranged immediately rearward of the switching units 2 with the circuit board 4 interposed therebetween. This makes it possible to accurately detect the temperatures of the switching units 2. Accordingly, when the brushless motor 10 comes into a locked state while in use, the temperature detecting elements 30 can detect a temperature rise in one or more specific switching units 2 with enhanced temperature responsiveness and can appropriately restrain or stop the operation of the brushless motor 10, making it possible to avoid occurrence of thermal damage in the switching units 2 and other parts with increased reliability.

If the brushless motor 10 comes into a locked state as stated above, an electric current continues to flow through one of the upper three-phase switching units 2 and one of the lower three-phase switching units 2, consequently generating heat. This means that it is not necessary to arrange the temperature detecting elements 30 at the rear sides of all the six switching units 2. If the temperature detecting elements 30 are arranged rearward of the lower three-phase switching units 2 in one-to-one correspondence as in the present embodiment, no difficulty is encountered in detecting the heat generation caused by the lock of the brushless motor 10. Even if the temperature detecting elements 30 are arranged rearward of the upper three-phase switching units 2 in one-to-one correspondence, the heat generation caused by the lock of the brushless motor 10 can be detected with no difficulty. It goes without saying that the temperature detecting elements 30 may be arranged rearward of all the switching units 2.

Next, description will be made on an electric power tool in accordance with a second embodiment of the present invention. The same configurations as those of the first embodiment will not be described in detail. Only the characteristic configurations differing from those of the first embodiment will be described in detail herein below.

As can be seen in Fig. 3, the electric power tool of the present embodiment differs from that of the first embodiment in terms of the configuration of the motor circuit 1. In the motor circuit 1 employed in the present embodiment, each of the upper and lower switching units 2 of three phases is composed of a pair of parallel-connected switching elements 20.

As shown in Fig. 4B, the temperature detecting units 3 (i.e., the temperature detecting elements 30) are arranged in different areas of the opposite surface 4b of the circuit board 4 existing rearward of the lower switching units 2 of U, V and W phases, one in each area.

Specifically, the temperature detecting elements 30 are arranged only in the areas of the opposite surface 4b of the circuit board 4 each existing rearward of one of a pair of the parallel-connected switching elements 20 included in the lower switching units 2.

The parallel-connected switching elements 20 have substantially the same temperature when heated. Therefore, even if the temperature detecting elements 30 are not arranged in pair in a corresponding relationship with each pair of the parallel-connected switching elements 20, it is possible to detect the heat generation state in each pair of the parallel-connected switching elements 20 with a single temperature detecting element 30.

The present invention is not limited to the configuration of the present embodiment in which each of the switching units 2 is composed of a pair of switching elements 20. Alternatively, each of the switching units 2 may be composed of three or more switching elements 20. In this case, a single temperature detecting element 30 may be arranged rearward of each of the switching units 2.

As described above, the electric power tools of the first and second embodiments of the present invention include the three-phase bridge type motor circuit 1 having the switching units 2 of U, V and W phases arranged in the upper and lower rows, the brushless motor 10 rotationally operated by the electric power supplied through the motor circuit 1, and the temperature detecting units 3 for detecting the temperatures of the switching units 2. The operation of the brushless motor 10 is restrained or stopped depending on the detection results of the temperature detecting units 3. The motor circuit 1 is formed by mounting the switching units 2 at six points on the mounting surface 4a of the circuit board 4. The temperature detecting units 3 are arranged on the opposite surface 4b of the circuit board 4, opposite to the mounting surface 4a thereof.

As a result, it becomes possible to arrange the temperature detecting units 3 immediately rearward of the switching units 2. This arrangement makes it possible to set the distance between the switching units 2 and the temperature detecting units 3 as small as the thickness of the circuit board 4, thereby realizing increased temperature responsiveness. Accordingly, when the brushless motor 10 comes into a locked state while in use, the temperature detecting elements 30 can accurately detect a temperature rise in specific switching units 2 and can appropriately restrain or stop the operation of the brushless motor 10.

In the electric power tools of the first and second embodiments of the present invention, the temperature detecting units 3 are arranged rearward of the respective lower switching units 2 of U, V and W phases. Alternatively, the temperature detecting units 3 may be arranged rearward of the respective upper switching units 2 of U, V and W phases.

As a result, the heat generation caused by the lock of the brushless motor 10 can be accurately detected using a simple and cost-effective configuration in which the temperature detecting units 3 are arranged only at three points.

In the electric power tool of the second embodiment, each of the switching units 2 is composed of a plurality of (e.g., a pair of) switching elements 20. The temperature of each of the switching units 2 is detected by a single temperature detecting element 30.

Consequently, even if each of the switching units 2 includes a plurality of switching elements 20, it is only necessary to arrange a single temperature detecting element 30 for each of the switching units 2. With this simple and cost-effective configuration, it is possible to accurately detect the heat generation caused by the lock of the brushless motor 10.

While certain embodiments of the present invention have been described with reference to the accompanying drawings, the present invention is not limited thereto. Suitable modification in design may be made without departing from the scope of the invention as defined by the claims.

## Claims

1. An electric power tool, comprising:
a three-phase bridge motor circuit (1) including upper and lower switching units (2) of U, V and W phases arranged in upper and lower rows;
a brushless motor (10) rotationally operated by an electric power supplied through the motor circuit (1); and
temperature detecting units (3) for detecting temperatures of the switching units (2) to output detection results such that the operation of the brushless motor (10) is restrained or stopped depending on the detection results outputted from the temperature detecting units (3),
wherein the motor circuit (1) is formed by mounting the switching units (2) at six points on a mounting surface of a circuit board (4) of the electric power tool, and the temperature detecting units (3) are arranged on a surface of the circuit board (4) opposite to the mounting surface,
**characterized in that**
the temperature detecting units (3) are arranged rearward of the upper switching units (2) or the lower switching units (2) of U, V and W phases.

2. The tool of claim 1, wherein each of the switching units (2) includes a plurality of switching elements (20), and each of the temperature detecting units (3) is formed of a single temperature detecting element (30).

## Patentansprüche

1. Elektrowerkzeug, umfassend:
eine Dreiphasen-Brückenmotorschaltung (1), die eine obere und eine untere Schalteinheit (2) aus einer U-, einer V- und einer W-Phase aufweist, die in einer oberen und einer unteren Reihe angeordnet sind;
einen bürstenlosen Motor (10), der durch eine elektrische Leistung rotierend betrieben wird, die durch die Motorschaltung (1) geliefert wird; und
Temperatur-Erfassungseinheiten (3) zum Erfassen von Temperaturen der Schalteinheiten (2), zum Ausgeben von Erfassungsergebnissen, so dass der Betrieb des bürstenlosen Motors (10) in Abhängigkeit von den Erfassungsergebnissen, die von den Temperatur-Erfassungseinheiten (3) ausgegeben werden, eingeschränkt oder angehalten wird,
wobei die Motorschaltung (1) durch Befestigung der Schalteinheiten (2) an sechs Punkten auf einer Befestigungsoberfläche einer Leiterplatte (4) des Elektrowerkzeugs ausgebildet ist, und die Temperatur-Erfassungseinheit (3) auf einer Oberfläche der Leiterplatte (4) entgegengesetzt zu der Befestigungsoberfläche angeordnet sind,
**dadurch gekennzeichnet, dass**
die Temperatur-Erfassungseinheiten (3) rückwärtig zu den oberen Schalteinheiten (2) oder den unteren Schalteinheiten (2) einer U-, einer V- und einer W-Phase angeordnet sind.

2. Werkzeug nach Anspruch 1, bei welchem jede der Schalteinheiten (2) mehrere Schaltelemente (20) aufweist, und jede der Temperatur-Erfassungseinheiten (3) aus einem einzigen Temperatur-Erfassungselement (30) ausgebildet ist.

## Revendications

1. Outil électrique, comprenant :
un circuit de moteur à pont triphasé (1) comprenant des unités de commutation supérieures et inférieures (2) de phases U, V et W agencées en rangées supérieures et inférieures ;
un moteur sans balai (10) actionné en rotation par une puissance électrique apportée par le biais du circuit de moteur (1) ; et
des unités de détection de température (3) destinées à détecter des températures des unités de commutation (2) pour sortir des résultats de détection de sorte que le fonctionnement du moteur sans balai (10) soit restreint ou arrêté en fonction des résultats de détection sortant des unités de détection de température (3),
dans lequel le circuit de moteur (1) est formé par le montage des unités de commutation (2) en six points sur une surface de montage d'une carte de circuit imprimé (4) de l'outil électrique, et les unités de détection de température (3) sont agencées sur une surface de la carte de circuit imprimé (4) à l'opposé de la surface de montage,
**caractérisé en ce que**
les unités de détection de température (3) sont agencées vers l'arrière des unités de commutation supérieures (2) ou des unités de commutation inférieures (2) de phases U, V et W.

2. Outil selon la revendication 1, dans lequel chacune des unités de commutation (2) comprend une pluralité d'éléments de commutation (20), et chacune des unités de détection de température (3) est constituée d'un seul élément de détection de température (30).
